Europäisches Patentamt

European Patent Office

Office européen des brevets

(19)

(11) Numéro de publication: **0 260 194 B1**

(12) **FASCICULE DE BREVET EUROPEEN**

(45) Date de publication de fascicule du brevet: **24.06.92** (51) Int. Cl.⁵: **A23C** 19/09, A23C 19/08

(21) Numéro de dépôt: **87401995.3**

(22) Date de dépôt: **07.09.87**

(54) **Procédé et installation de traitement d'un fromage, spécialité fromagère à base d'un fromage ainsi traité et produit alimentaire comportant cette spécialité fromagère.**

(30) Priorité: **08.09.86 FR 8612548**

(43) Date de publication de la demande:
**16.03.88 Bulletin 88/11**

(45) Mention de la délivrance du brevet:
**24.06.92 Bulletin 92/26**

(84) Etats contractants désignés:
**AT BE CH DE ES FR GB IT LI LU NL**

(56) Documents cités:
EP-A- 0 004 502      CH-A- 249 359
FR-A- 2 386 235      US-A- 3 761 284
US-A- 3 870 811      US-A- 3 962 483
US-A- 4 552 774

(73) Titulaire: **BONGRAIN S.A.**
**Le Moulin à Vent**
**F-78280 Guyancourt(FR)**

(72) Inventeur: **Boutineau,Claude**
**13 Ile de Migneaux**
**78300 Poissy(FR)**
Inventeur: **Frouin,Andre**
**11 rue de Mouchy**
**78000 Versailles(FR)**
Inventeur: **Dame,Michele**
**Chevry**
**91190 Gif-Sur-Yvette(FR)**
Inventeur: **Paquet,Philippe**
**23 allee de l'Aube**
**78310 Maurepas(FR)**

(74) Mandataire: **Derambure, Christian**
**Cabinet Bouju Derambure (Bugnion) S.A. 55,**
**rue Boissonade**
**F-75014 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

L'invention concerne un procédé et une installation de traitement d'un fromage; une spécialité fromagère à base d'un fromage ainsi traité et un produit alimentaire comportant cette spécialité fromagère.

On connaît déjà, tout d'abord, des procédés de réalisation de produits alimentaires comportant l'association de plusieurs fromages distincts, ainsi que les produits alimentaires résultant de la mise en oeuvre de ces procédés. Dans le document CH 249 359, on fait adhérer l'un à l'autre des blocs distincts de fromages différents au moyen d'un agent liant. Les blocs peuvent être séparés par des feuilles permettant de diviser le produit réalisé en ses différents blocs. L'emploi de fromage fondu pour réaliser les blocs est recommandé. Dans les documents CH 236 002, FR 2 411 539, FR 2 475 361, FR 2 504 781, la mise en place des différents éléments constitutifs du produit alimentaire est réalisée en plusieurs étapes distinctes et successives. En général, l'élément externe est un fromage fondu ce qui assure au produit alimentaire la tenue mécanique nécessaire et la technique employée pour la mise en place de tout ou certains des éléments constitutifs du produit alimentaire s'apparente à celle utilisée pour la fabrication d'un fromage fondu. Dans le document EP 128 963 on réalise un fromage fondu en couches multiples par formages séparés et expulsion avec guidage individuel. La technique mentionnée plus haut de mise en place successive des éléments constitutifs est également employée pour la réalisation de produits alimentaires sucrés au lieu de lactés tels des produits de confiserie (document FR 250 43 58). Ainsi, ces procédés connus, soit conduisent à des produits alimentaires comportant exclusivement ou essentiellement un ou plusieurs fromages fondus, soit nécessitent l'emploi de techniques comportant des étapes distinctes et successives donc discontinues. En conséquence, ces procédés connus ne permettent pas, d'une part, une variété de formes de réalisation répondant à la variété des goûts ou des besoins des consommateurs, d'autre part l'emploi de techniques à forte productivité et faible coût de revient telles que les techniques en continu utilisées dans l'industrie.

On connaît également l'emploi de la technique de l'extrusion pour la réalisation de produits alimentaires marbrés ou comportant un élément externe entourant un élément interne (documents EP 102 232, EP 130 748, EP 130 772). Toutefois, cette technique n'a été appliquée qu'à des produits de constitution appropriée, notamment à base de farine. Par contre, cette technique est généralement inemployée dans le cas de produits alimentaires constituées de/ou comportant un ou plusieurs fromages car ceux-ci ne peuvent, du fait de leur constitution même, être traités par une telle machine d'extrusion ou toute autre machine similaire. Le document US 3 761 284 prévoit, pour remédier à ce problème, de refroidir brutalement et sous une pression appropriée une formulation à base de fromage préalablement chauffé pour permettre son extrusion. Toutefois, la nécessité, selon le brevet US 3 761 284, de contrôler précisément la température et la pression, et cela dans une technique normalement de type continu (extrusion), pose d'importants problèmes de mise en oeuvre qui en limite sûrement l'utilisation. Enfin, la formulation préconisée comporte des sels de fonte. Le document EP 0004502 décrit une technique de fabrication de produits fourrés, tels que des saucisses, pouvant être obtenus par coextrusion, la partie externe étant principalement de la chair à saucisse et la partie interne pouvant comporter du fromage, sans que ce choix apparaisse comme déterminant, le corps retenu l'étant pour son pouvoir aromatisant et sans que la nature et les propriétés du dit fromage ne soient précisées. Pour éviter que la partie interne ne s'échappe de la partie externe, il est prévu d'épaissir la pâte formant la partie interne, par ajout, à celle-ci, d'un produit épaississant, ou gélifiant, en particulier des protéines coagulables, dont la température de coagulation est inférieure à celle atteinte lors du traitement thermique du produit, de manière que les protéines de la partie externe et de la partie interne, respectivement, soient coagulées lors de ce traitement thermique. Ce traitement thermique et cette coagulation visent à modifier la texture des produits respectifs constituant la partie externe et la partie interne pour leur conférer une consistance suffisante permettant la manipulation. Par conséquent, le document EP 0004502 suggère l'idée d'employer, dans la fabrication de produits fourrés, un traitement thermique de texturation des produits après assemblage des parties interne et externe, ce qui, par conséquent, modifie substantiellement leur texture respective, les textures finales étant donc différentes, notamment très différentes, des textures initiales. Le document JP 59-78642 décrit l'addition à un fromage à pâte molle d'additifs, tels que l'albumine, pour lui conférer une résistance à la chaleur, ce fromage étant, ensuite, inséré ou appliqué à l'intérieur ou à l'extérieur de la peau d'un autre produit alimentaire, le produit composite ainsi réalisé faisant ensuite l'objet d'un traitement thermique qui n'a pas pour effet de transformer ce fromage en fromage fondu ou de provoquer son écoulement.

On connaît enfin l'incorporation à des produits alimentaires ou non et en particulier un fromage, d'un ou plusieurs additifs fonctionnels et par exemple, l'incorporation de protéines notamment du lait.

Le document FR N° 2 301 180 prévoit l'incorporation à des fromages de lactoprotéines thermocoagulables du lactosérum, selon un procédé très spécifique (incorporation dans le lait de fromagerie) ; le document FR N° 2 538 676 prévoit l'adjonction à une pâte de boulangerie d'une poudre de lactosérum doux dont la fonction est d'accélérer la fermentation. Le document EP N° 90 775 prévoit la présence de protéines lactées dans une barre casse-croûte salée, ce produit devant avoir une bonne conservation. Le document FR N° 2 348 737 prévoit l'emploi de protéines comme agent de moussage (meringues, gâteaux, pains ...) ou comme agent stabilisant (saucisses, compositions reconstituées de viandes, poissons, légumes). Les fonctions émulsifiantes et gélifiantes des protéines sont connues dans l'industrie des cosmétiques (document FR 2 520 253).

Le document US 3 870 811 décrit une technique de fabrication d'un produit alimentaire à haute teneur en protéines, tranchable, à cuire. On mélange une base alimentaire sujette à synérèse - telle qu'un caillé de fromagerie - avec de l'albumine ou de la globuline, à froid. Puis, on réalise un traitement mécanique (mise en container, extrusion). Puis, ultérieurement, on réalise un traitement thermique à 80°, 100°C. L'albumine ou la globuline est utilisée pour sa propriété fonctionnelle gélifiante. le cas échéant d'autres additifs de consistance ou de texture peuvent être ajoutés, également. Le document US 3 962 483 décrit une technique de fabrication d'un fromage fondu, fondée sur les mêmes principes que ceux du document US 3 870 811. La coagulation des albumines est alors utilisée pour permettre à un fromage fondu d'être réchauffé avant consommation, sans se liquéfier - ce qui se produirait normalement du fait de la solubilisation des caséines par les sels de fonte employés lors de la fabrication. Le document US 4 552 774 décrit un procédé de fabrication d'un produit imitant le fromage, dont la texture est formée par une matrice amidon-albumine qui est créée pendant une phase de traitement thermique à 60°C-88°C et dans laquelle des particules de fromage sont insérées. Ce produit est également caractérisé par l'absence d'émulsifiant. Le document FR 2 265 282 décrit une autre variante de dispersion d'un fromage dans une matrice d'un mélange de colloïde et de caséine, celle-ci empêchant la libération d'huile et d'eau et devant impérativement être combinée aus colloïdes insuffisants à eux-seuls pour obtenir, ainsi que cela est souhaité dans ce document, un gel cohérent et ferme dans lequel le fromage est incorporé. Le mélange du fromage, des colloïdes et de la caséine est effectué à une température comprise entre 65°C et 120°C. Le document FR 2 095 139 décrit un produit riche en protéines, imitant le fromage, contenant au maximum 25% en poids de fromage et également des amidons et un agent liant. L'emploi d'une mise en forme par extrusion, ainsi qu'il est suggéré, nécessite une formulation dans laquelle les farines et amidons ont une place importante ou encore une formulation comprenant des sels de fonte. Par conséquent, dans ces divers documents, s'il est juste que le produit final obtenu contient du fromage, sa texture et son aspect - notamment - sont totalement différents de ceux du fromage initial entrant dans la composition.

L'invention a pour objectif de réaliser un produit alimentaire à base de fromage, plus spécialement de fromage à pâte pressée, qui, après le traitement nécessaire à sa mise en forme, sa protection vis-à-vis d'éventuelles contaminations, et à l'association avec un second produit, présente des caractéristiques générales notamment de texture, goût, couleur, substantiellement identiques à celles du fromage avant son traitement.

L'invention a également pour objectif de réaliser un produit alimentaire à base de fromage, comportant plusieurs éléments distincts quant à leur nature, texture, goût, couleur, l'un au moins de ces éléments ayant la texture, le goût et la couleur d'un fromage affiné, plus spécialement à pâte pressée. Un autre de ces éléments constitutifs peut être à base de fromage ou non (par exemple, de viande, poisson, légumes, fruits, produits sucrés ou salés), plus ou moins solide ou pâteux.

Un autre objectif de l'invention est de réaliser un produit alimentaire susceptible d'être manipulé, conservé, consommé dans des conditions satisfaisantes : la forme du produit alimentaire est stable dans le temps. Le produit alimentaire est suffisamment résistant mécaniquement et sa tenue dans les doigts du consommateur est facile et agréable (notamment ne présentant pas de sensations grasses au toucher). La durée de conservation du produit alimentaire est de l'ordre de 45 à 90 jours au froid. La consommation du produit alimentaire est facile puisqu'aucune préparation particulière (telle que chauffage ou autre) n'est nécessaire avant consommation. La réalisation du produit alimentaire comportant plusieurs éléments distincts, ainsi que mentionné plus haut, rend ce produit attractif et nouveau pour le consommateur.

Un autre objectif de l'invention est de pouvoir réaliser un produit alimentaire ainsi que mentionné plus haut pouvant avoir des formes originales et variées.

Enfin, un ultime but de l'invention est de réaliser un tel produit alimentaire de façon satisfaisante quant au débit, à la facilité de mise en oeuvre et à la productivité de fabrication.

A cet effet, l'invention concerne d'abord un procédé de traitement d'un fromage, qui comporte une première étape d'addition de protéines au fromage et une seconde étape, ultérieure, de traitement mécanique de mise en forme, caractérisé en ce que d'une part on sélectionne le fromage à traiter parmi les fromages affinés ayant au moins 50% de matières sèches et plus spécialement parmi les fromages à pâte pressée, les fromages fondus étant exclus; et, d'autre part, on sélectionne la nature des protéines et les conditions de leur addition au fromage à traiter, de manière que les protéines, simultanément, soient au moins substantiellement solubles, aient un goût neutre ou lacté et remplissent essentiellement la fonction émulsifiante et peu ou pas la fonction gélifiante et ce à une température modérée inférieure à la température de thermocoagulation; ce qui a pour effet, en combinaison, d'une part de permettre un traitement mécanique de mise en forme notamment par des techniques d'extrusion-formage, roulage-filage-pressage, extrusion-soufflage ou similaire, et, d'autre part, d'obtenir par le traitement un fromage traité ayant une texture, un goût, une couleur substantiellement identiques à celles du fromage à traiter et une forme spécifique résultant du traitement mécanique employé.

L'invention concerne ensuite une installation de traitement d'un fromage affiné, notamment un fromage à pâte pressée, à l'exclusion de la fabrication d'un fromage fondu classique, caractérisée par le fait qu'elle comporte d'une part, des moyens 1 de chauffage entre 40°C et 80°C notamment au voisinage de 80°C du fromage à traiter, des moyens d'adjonction de protéines et des moyens 3 de mélange du fromage à traiter avec les protéines ; et, d'autre part, des moyens mécaniques de mise en forme du fromage ainsi mélangé et additionné de protéines, fonctionnant à chaud.

L'invention concerne également une spécialité fromagère à base de fromage affiné réalisée par le procédé mentionné ci-dessus.

L'invention concerne enfin un produit alimentaire consommable qui comporte une telle spécialité fromagère et au moins un second produit.

L'invention permet d'utiliser des techniques de fabrication notamment de mise en forme connues dans d'autres applications très différentes (notamment les matières plastiques, la charcuterie, la boulangerie, la confiserie) avec les avantages qu'elles comportent (notamment leur fonctionnement continu). Dans le cas du fromage, ces techniques sont soit inutilisées seules, soit mises en oeuvre moyennant une "retexturation" du fromage, notamment au moyen de protéines mises en oeuvre pour leur fonction gélifiante, notamment à une température supérieure à la température de coagulation des dites protéines. L'invention exclut l'usage de sels de fonte ainsi que la réalisation d'un fromage fondu classique. Selon l'invention, le fromage n'est pas sujet à synérèse. La principale fonction recherchée chez les protéines est la fonction émulsifiante, à l'exclusion de la fonction gélifiante. De plus, les protéines sont solubles, neutres quant au goût (éventuellement avec un goût lacté). Les protéines sont fonctionnelles à une température inférieure à la température de thermocoagulation. Un choix préférentiel de protéines est celui des protéines de lactosérum. L'emploi de telles protéines, dans ces conditions, évite que le fromage à traiter ne se déstabilise et perde une partie importante de sa matière grasse ce qui conduirait à une modification de texture. La texture initiale est préservée alors même que le fromage subit un traitement mécanique et thermique notamment de mise en forme. L'invention exclut l'emploi de protéines végétales qui ont du goût, de la caséine, peu performante, qui forme des particules, du fait qu'elle n'est pas soluble. L'invention exclut également l'adjonction de sels de fonte.

Les autres caractéristiques de l'invention résulteront de la description qui suivra en référence aux dessins annexés dans lesquels :

- La figure 1 est un schéma illustrant une forme de réalisation possible du procédé selon l'invention.
- Les figures 2 et 3 sont deux vues schématiques en perspective illustrant deux formes de réalisation possibles, non limitatives, d'un produit alimentaire consommable conforme à l'invention.

L'invention concerne d'abord un procédé de traitement d'un fromage $F_1$ qui comporte une première étape d'addition, au fromage à traiter $F_1$, de protéines P et une seconde étape de traitement mécanique de mise en forme.

Selon l'invention, d'une part on sélectionne le fromage à traiter $F_1$ parmi les fromages affinés ayant au moins 50% de matières sèches et plus spécialement parmi les fromages à pâte pressée, les fromages fondus étant exclus; et, d'autre part, on sélectionne la nature des protéines P et les conditions de leur addition au fromage à traiter $F_1$, de manière que les protéines P, simultanément, soient au moins substantiellement solubles, aient un goût neutre au lacté et remplissent essentiellement la fonction émulsifiante et peu ou pas la fonction gélifiante; et ce à une température modérée inférieure à la température de thermocoagulation, ce qui a pour effet, en combinaison, d'une part de permettre un traitement mécanique de mise en forme notamment par des techniques d'extrusion-formage, roulage-filage-pressage, extrusion-soufflage ou similaire, et, d'autre part, d'obtenir par le traitement un fromage traité $F_2$ ayant une texture, un goût, une couleur substantiellement identiques à elles du fromage à traiter $F_1$ et une forme spécifique résultant du traitement mécanique employé.

Le fromage $F_1$ peut être connu en soi. Son procédé de fabrication en tant que tel ne fait pas, en soi, partie de l'invention. Le procédé de traitement selon l'invention intervient séparément et postérieurement à la fabrication même du fromage $F_1$.

Le fromage $F_1$ est un fromage peu ou fortement affiné, à pâte ferme, choisi plus spécialement et de préférence dans la gamme des fromages à pâte pressée, cuite ou non. Un tel fromage a au moins 50% de matières sèches et un taux de gras sur sec par exemple de l'ordre ou supérieur à 25%. Un tel fromage n'est pas soumis à synérèse. Des fromages convenant bien au procédé de traitement selon l'invention sont des fromages de Hollande (Gouda, Edam, Mimollette, Leerdarmeur) ou des fromages à pâte pressée (Saint-Paulin, Emmenthal, Comté, Cheddar).

Les protéines P sont additionnées au fromage à traiter $F_1$ lorsque celui-ci d'une part est à une température comprise entre 40°C et 80°C, notamment égale ou voisine de 80°C, et, d'autre part pendant une étape de mélange du fromage $F_1$ et des protéines P. Le traitement mécanique est réalisé à chaud notamment à au moins 40°C et préférentiellement de l'ordre de 50°C immédiatement ou peu de temps après l'addition des protéines P.

Ainsi que cela résulte déjà de ce qui précède, c'est essentiellement la fonction émulsifiante des protéines P qui est mise en oeuvre dans l'invention. Le traitement mécanique peut être réalisé à une température à laquelle les protéines ne coagulent pas. Préférentiellement, la température est plus élevée seulement pour des raisons hygiéniques et de conservation.

Le procédé peut comporter un traitement thermique du mélange de fromage $F_1$ et des protéines P à température plus ou moins élevée, ainsi que mentionné précédemment, et d'une durée plus ou moins longue pouvant aller de 1 minute à 1 heure et de préférence de 1 minute à 10 minutes et ceci en fonction de la viscosité nécessaire au traitement mécanqiue ultérieur du fromage.

D'une façon générale, le traitement mécanique est terminé ou pratiquement terminé 20 minutes au plus et préférentiellement moins de 15 minutes environ après l'addition des protéines P.

Préférentiellement, on met en oeuvre d'une part des protéines de lactosérum et, d'autre part dans la proportion de 2 % à 10 % en poids environ, notamment entre 5 % et 10 % environ, par rapport au poids du fromage $F_1$ à traiter.

Les protéines sont ajoutées préférentiellement sous forme de concentrés protéiques en poudre ce qui a tendance à augmenter favorablement ou, à tout le moins, à ne pas diminuer le taux de matières sèches du fromage du fait de son traitement par le procédé selon l'invention.

Dans une variante possible, les protéines P sont présentes en partie ou même en totalité lors du traitement du fait que l'on part d'un fromage fabriqué à partir de rétentat de lait issu d'ultrafiltration ou similaire, c'est-à-dire par un procédé de fabrication comportant une étape de récupération de protéines lactosériques dans le caillé. Dans ce cas, ces protéines sont également fonctionnelles pendant le traitement mécanique du fromage en rendant celui-ci possible.

Selon l'invention, on constate que l'adjonction (directe ou indirecte) à un fromage du type mentionné précédemment, (notamment affiné ayant au moins 50% de matières sèches, plus spécialement un fromage à pâte pressée), de protéines notamment de lactosérum, avant d'amener le fromage à une température de l'ordre de 80°C, permet de conférer au fromage une machinabilité permettant son traitement mécanique ultérieur à chaud par les procédés connus en soi d'extrusion - formage, roulage - filage -pressage, extrusion - soufflage ou tout autre procédé similaire, ce traitement mécanique n'affectant pas la texture, le goût et la couleur du fromage une fois traité par rapport à son état avant traitement. Le fromage utilisé pour le traitement étant au départ un fromage à pâte ferme, il en résulte la possibilité de fabriquer par extrusion - formage, roulage - filage - pressage, extrusion - soufflage ou similaire, notamment en continu, un fromage suffisamment rigide, donc très différent d'un fromage fondu, et, également très différent d'une dispersion du fromage dans un gel.

Normalement il n'y a pas lieu d'ajouter au fromage à traiter $F_1$ d'autres additifs alimentaires de texture, d'aspect ou d'arôme (notamment des sels de fonte). Toutefois, il est envisageable, pour autant que cela soit souhaitable, de combiner le fromage traité $F_2$ à d'autres corps consommables ou d'autres produits alimentaires. Dans ce cas, on réalise alors une spécialité alimentaire. L'invention considère indifféremment le fromage traité $F_2$ isolément ou la spécialité alimentaire.

Dans une application particulière du procédé selon l'invention, simultanément à la mise en forme du fromage $F_1$ par traitement mécanique, on traite mécaniquement au moins un second produit ou composition ou spécialité alimentaire I, de manière que le fromage traité $F_2$ et le second produit alimentaire I soient associés mécaniquement l'un avec l'autre en vue de réaliser un produit alimentaire consommable et composite B. Cette association du fromage traité $F_2$ avec le second produit I résulte des traitements mécaniques simultanés opérés.

Les protéines P additonnées au fromage $F_1$ et présentes dans le fromage $F_2$ ont également pour fonction de limiter l'exsudation de matières grasses et donc de contrôler la constitution sur le fromage

traité $F_2$ d'un film gras d'épaisseur très fine microscopique qui simultanément, d'une part, limite la migration d'eau depuis le second produit I vers le fromage traité $F_2$ et, d'autre part, donne au fromage traité $F_2$ un aspect et un toucher satisfaisants. La présence des protéines P permet donc de limiter l'exsudation résultant du traitement thermique du fromage à traiter $F_1$, cette exsudation étant susceptible si elle n'est pas contrôlée d'entraîner la présence d'un film gras plus épais qui, s'il est placé à l'extérieur du fromage, donne un aspect et un toucher peu agréables. Cette fonction est utile lorsque le fromage traité $F_2$ est placé à l'extérieur du second produit I, ainsi qu'il est mentionné ultérieurement.

On peut ajouter au second produit I un rétenteur d'eau ou d'autres additifs alimentaires de texture, d'aspect ou d'arôme, selon le produit final B que l'on désire obtenir.

Dans une forme de réalisation préférentielle, on traite mécaniquement le fromage à traiter $F_1$ et le second produit I de manière que le fromage traité $F_2$ soit placé autour et à l'extérieur du second produit I, en tout ou en partie. Le fromage traité $F_2$ forme alors une coque externe C et le produit I une garniture interne G.

La coque C a une fonction de protection et de conservation du produit alimentaire B. La coque C est suffisamment rigide pour maintenir la forme et la tenue du produit alimentaire B et protéger la garniture G des chocs mécaniques. La coque C peut être tenue dans les doigts tout en restant souple et agréable.

La coque C est constituée exclusivement ou principalement -c'est-à-dire par au moins 80 % en poids- de fromage traité $F_2$ par le procédé précédemment décrit. L'invention s'applique aussi au cas d'une coque C réalisée à partir d'un mélange de plusieurs fromages, le procédé comportant alors une étape initiale de mélange des différents fromages avec la protéine P faisant suite éventuellement à une étape dans laquelle les fromages sont réduits en morceaux de petite taille pour permettre le traitement thermique (si les fromages sont livrés en blocs importants et non en petits morceaux).

La garniture G peut faire l'objet de nombreuses variantes de réalisation en fonction du produit alimentaire final B que l'on souhaite obtenir. Il peut s'agir d'un produit à base de fromage ou une spécialité fromagère, ou à base de charcuterie, ou de patisserie, ou de confiserie, etc ... La garniture G peut être homogène, plus ou moins solide ou molle, voire plus ou moins liquide. La garniture G peut être hétérogène et comporter des morceaux inclus tels que : fruits, fruits de mer, légumes, jambon, champignons, fromage, etc ...

Dans une forme de réalisation possible de l'invention, la garniture G est constituée par une spécialité fromagère ou un fromage à pâte fraîche.

Le procédé selon l'invention permet donc de combiner un fromage $F_2$ et un second produit I ayant des textures et des goûts différents jugés heureusement complémentaires par le consommateur.

Un tel produit alimentaire B peut être conservé pendant 45 à 90 jours à quelques degrés. Il peut être conditionné sous atmosphère contrôlée, contenant moins de 1 % d'oxygène résiduel.

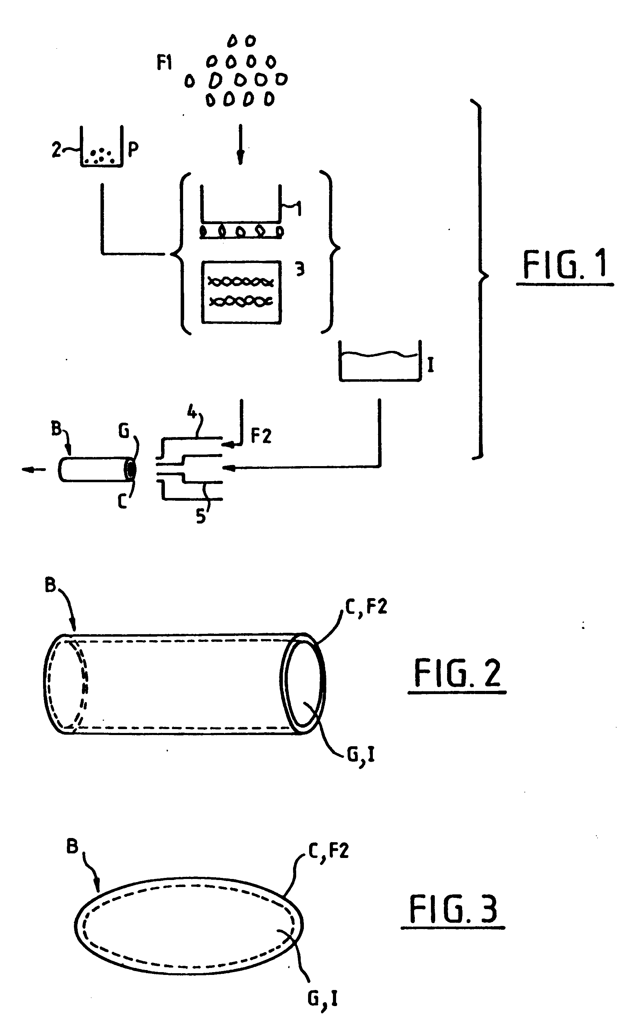

Le traitement mécanique envisagé permet généralement la réalisation d'un produit alimentaire B plus ou moins continu et de caractéristiques physicochimiques identiques ou voisines sur toute la longueur. L'emploi d'un traitement mécanique de type coextrusion permet ainsi de réaliser un produit alimentaire B qui, une fois coupé à longueur, transversalement en tronçons, peut avoir la forme générale représentée sur la figure 2. Cette forme s'apparente à celle d'une barre comportant une couche externe latérale formant la coque C, en fromage traité $F_2$, et une barre centrale formant la garniture G en second produit I. Le contour d'une section droite transversale de la coque C ou de la garniture G peut être quelconque, en fonction de la forme des buses de la machine de coextusion : circulaire, ellipsoidal, carré, en étoile, etc ... Dans cette variante, la face d'extrémité laisse apparaître la garniture G.

En variante, après une première étape de traitement mécanique, on réalise une seconde étape lorsque le fromage traité $F_2$ présente encore une consistance élastique de manière à enfermer totalement le second produit I dans le fromage traité $F_2$ en vue de former une inclusion totale. L'ensemble peut alors avoir une forme plus ou moins ovoide ou une forme de rocher ou tout autre forme souhaitée. Une forme préférentielle est une forme d'oeuf ou de pseudo oeuf plus ou moins gros, (figure 3), la coque C étant fermée en coquille et la garniture G incluse à la manière d'un noyau.

L'invention concerne ensuite une installation de traitement de fromage affiné pour la mise en oeuvre du procédé qui vient d'être décrit. Cette installation comporte d'une part des moyens de chauffage 1 du fromage à traiter $F_1$ entre 40°C et 80°C notamment au voisinage de 80°C, des moyens 2 d'adjonction de protéines P; des moyens de mélange 3 du fromage $F_1$ avec les protéines P; et d'autre part des moyens mécaniques 4 de mise en forme du fromage $F_1$ ainsi mélangé et additionné de protéines P, fonctionnant à caud, en sortie desquels on obtient le fromage $F_2$. Sur la figure 1, on a séparé en deux les moyens de chauffage 1 et les moyens de mélange 3, seulement pour une meilleure compréhension du procédé, étant souligné, toutefois, que ces moyens 1, 3 sont combinés structurellement et agissent d'ailleurs simultanément. Dans une variante possible, (cas d'une machine d'extrusion), les moyens mécaniques de mise en forme 4 sont combinés structurellement aux moyens de chauffage 1 et aux moyens de mélange 3, ces trois moyens agissant ensemble.

La figure 1 représente les moyens 1, 3, 4 séparés seulement pour une meilleure comprehension du procédé.

Dans une autre variante possible, les moyens de mise en forme 4 sont structurellement distincts et placés en aval des moyens de chauffage 1 et des moyens de mélange 3.

Aux moyens mécaniques de mise en forme 4 du fromage $F_2$ peuvent être associés fonctionnellement des moyens mécaniques de traitement 5 d'au moins un second produit I dans un poste de traitement mécanique pouvant être constitué par une machine de coextrusion ou une machine de copoussage ou une ligne rouleuse -fileuse - presse ou toute machine équivalente, permettant le traitement mécanique simultané d'au moins deux produits alimentaires $F_2$ et I pour réaliser le produit B. Les moyens de traitement 5 peuvent comprendre les moyens de chauffage et de mélange du produit I avec incorporation éventuelle à celui-ci d'additifs.

Ces machines sont connues en soi et sont destinées à d'autres applications telles que : la confiserie, la pâtisserie, la charcuterie, la boulangerie, les matières plastiques, etc... Ces machines sont rendues appliquables au traitement du fromage, en tant que l'un au moins des constituants du produit final B à réaliser à savoir le fromage $F_1$ est traité grâce à l'adjonction des protéines P ainsi qu'il a été mentionné précédemment. Par conséquent, la liste des machines pouvant être employées dans l'installation selon l'inventoin n'est nullement limitative.

Le cas échéant, le poste de traitement mécanique comporte des moyens aptes à enfermer totalement le second produit I dans le fromage traité $F_2$ formant une coque externe ainsi qu'il a été mentionné précédemment.

L'invention concerne également un fromage traité $F_2$ (ou une spécialité fromagère à base de fromage traité $F_2$) réalisée par le procédé décrit précédemment, ainsi qu'un produit alimentaire B comportant le fromage traité $F_2$ et au moins un second produit I, également réalisé conformément au procédé précédemment décrit.

Le fromage traité ou la spécialité fromagère $F_2$ peut constituer une coque C, ouverte ou fermée, rigide, ayant les mêmes caractéristiques de texture, de goût et de couleur que le fromage originel à traiter $F_1$. Le second produit I peut constituer un fourrage ou une garniture G rigide, mou ou quasi liquide. La coque C est constituée par exemple d'au moins 80 % de fromage à pâte ferme, notamment un fromage de Hollande ou un fromage à pâte pressée. La garniture G peut être à base notamment de fromage, de confiserie, de patisserie ou de charcuterie. La coque C peut avoir une épaisseur de l'ordre de 2 mm. à 4 mm environ. Le rapport entre le diamètre intérieur de la coque, c'est-à-dire le diamètre de la garniture G et le diamètre extérieur de la coque C peut être de l'ordre de 0,75. La garniture G peut représenter entre 25 % et 90 % en poids, environ, notamment entre 70 % et 90 % en poids, du produit total et final B. La coque C peut avoir un extrait sec compris entre 50 % et 68 % environ et un taux de gras sur sec compris entre 35% et 52% environ. Lorsque la garniture G est à base de fromage, elle peut avoir un extrait sec compris entre 18 % et 50 % environ, et un taux de gras sur sec compris entre 0% et 70% environ. Le produit alimentaire B ainsi réalisé peut avoir un poids compris entre 5 et 150 grammes environ et une forme générale de barre, de boule d'oeuf ou toute autre forme souhaitée.

Exemple 1.

Le fromage utilisé pour la coque externe C est du gouda jeune dont l'extrait sec est de 59 % et le taux de gras sur sec de 51,5 %. Le fromage est réduit en petits morceaux. Des protéines de lactosérum dans un dosage de 5 % en poids sont ajoutées au fromage et l'ensemble est mélangé et amené à 45 ° C par un chauffage pendant 5 minutes, pour former une masse homogène. Cette masse est introduite dans la première trémie d'alimentation d'une machine connue sous la marque : "RHEON".

La garniture est constituée de fromage frais double crème (second produit) dont l'extrait sec est de 44 % et le taux de gras sur sec de 70 %. Cette garniture est introduite à 8°C environ dans la seconde trémie de la machine.

Le passage en machine permet de réaliser un produit comportant jusqu'à 65 % en poids de garniture (correspondant à la forme générale de la figure 2)

Exemple 2.

Un fromage à traiter du type pâte pressée fabriqué à partir de rétentat d'ultrafiltration et un second produit identiques ou voisins de ceux de l'exemple 1 ont été traités dans une ligne rouleuse -fileuse- presse. Le fromage constituant la coque externe est passé sur quatre rouleaux coniques cannelés et chauffés à environ 70°C, animés d'un mouvement alternatif : 8 tours dans un sens puis 8 tours dans le sens opposé. L'alimentation du second produit constituant la garniture est effectuée sous faible pression de l'ordre de 0,3 à 1 bar et notamment de l'ordre de 0,5 bar, à une température de l'ordre de 45 à 55°C. Le boudin fourré ainsi réalisé est allongé et étiré dans une fileuse puis découpé. Les bords francs de la découpe sont arrondis en passant dans des cylindres formeurs jusqu'à obtenir des sphères ou des pièces ovoïdes (correspondant à la forme générale de la figure 3).

Exemple 3.

D'autres fromages en tant que matière première sont utilisés : Emmenthal, Edam, Mimolette, Cheddar, fromage à raclette, Saint-Paulin, traités selon le procédé décrit dans l'exemple 1 pour obtenir le même type de produit.

Exemple 4.

Un produit alimentaire sous forme de barre (figure 2) peut être réalisé par coextrusion. La coque externe est réalisée à partir d'Edam ayant un taux de gras sur sec de 40 % auquel on additionne des protéines de lactosérum dans la proportion de 10 %. La température du fourreau de l'extrudeur est de 80°C. L'extrudeur est pourvu d'une filière de coextrusion permettant d'introduire un fourrage constitué par une spécialité fromagère telle que celle connue sous la marque "Saint-Moret". Le produit final en forme de double boudin concentrique peut être tranché transversalement en pièces.

Exemple 5.

Le fromage matière première utilisé pour la formation de la coque est identique à celui de l'exemple 1 mais il est chauffé à 85°C pendant une durée de l'ordre de 13 minutes, les protéines étant ajoutées avec une dose de 10% en poids environ. La machine type "RHEON" est préalablement chauffée à 85°C environ. Le fourrage est composé d'un fromage à pâte fraîche double crème introduit dans la machine à 73° C.

**Revendications**

1. Procédé de traitement d'un fromage (F$_1$), qui comporte une première étape d'addition de protéines (P) au fromage (F$_1$) et une seconde étape, ultérieure, de traitement mécanique de mise en forme dans lequel d'une part on sélectionne le fromage à traiter (F$_1$) parmi les fromages affinés ayant au moins 50 % de matières sèches et plus spécialement parmi les fromages à pâte pressée, les fromages fondus étant exclus ; et, d'autre part, on sélectionne la nature des protéines (P) et les conditions de leur addition au fromage à traiter (F$_1$),

de manière que les protéines (P), simultanément, soient au moins substantiellement solubles, aient un goût neutre ou lacté et remplissent essentiellement la fonction émulsifiante et peu ou pas la fonction gélifiante ; et ce à une température modérée inférieure à la température de thermocoagulation, ce qui a pour effet, en combinaison, d'une part de permettre un traitement mécanique de mise en forme notamment par des techniques d'extrusion-formage, roulagefilagepressage, extrusion-soufflage ou similaire, et, d'autre part, d'obtenir par le traitement un fromage traité (F$_2$) ayant une texture, un goût, une couleur substantiellement identiques à celles du fromage à traiter (F$_1$) et une forme spécifique résultant du traitement mécanique employé.

2. Procédé selon la revendication 1, dans lequel les protéines (P) additionnées sont présentes dans le fromage à traiter (F$_1$) d'une part lors-que celui-ci à une température comprise entre 40°C et 80°C, notamment égale ou voisine de 80°C et d'autre part pendant une étape de mélange, le traitement mécanique étant réalisé à chaud notamment à au moins 40°C et préférentiellement de l'ordre de 80°C immédiatement ou peu de temps après l'addition de protéines.

3. Procédé selon l'une quelconque des revendications 1 et 2, dans lequel le traitement mécanique est terminé ou pratiquement terminé vingt minutes au plus et préférentiellement moins de quinze minutes environ après l'addition de protéines (P).

4. Procédé selon l'une quelconque des revendications 1 à 3, dans lequel on met en oeuvre des protéines de lactosérum.

5. Procédé selon l'une quelconque des revendications 1 à 4, dans lequel on additionne entre 2 % et 10 % en poids, notamment entre 5 % et 10 % en poids de protéines (P) par rapport au fromage à traiter (F$_1$).

6. Procédé selon l'une quelconque des revendications 1 à 5, dans lequel on met en forme le fromage traité (F$_2$) par traitement mécanique et simultanément, on traite mécaniquement au moins un second produit ou composition ou spécialité alimentaire (I), de manière que du fait des traitements mécaniques le fromage traité (F$_2$) et le second produit alimentaire (I) soient associés l'un avec l'autre en vue de réaliser un produit alimentaire consommable composite (B).

7. Procédé selon l'une quelconque des revendications 1 à 6, dans lequel les protéines (P) additionnées au fromage à traiter (F₁) ont également pour fonction de limiter l'exsudation de matière grasse et donc de contrôler la constitution sur le fromage traité (F₂) d'un film gras d'épaisseur microscopique qui simultanément, d'une part, limite la migration d'eau depuis le second produit (I) vers le fromage traité (F₂) et, d'autre part, donne au produit un aspect et un toucher satisfaisants.

8. Procédé selon l'une quelconque des revendications 1 à 7, dans lequel on ajoute au second produit (I) un rétenteur d'eau et/ou d'autres additifs alimentaires de texture, d'aspect, d'arôme.

9. Procédé selon l'une quelconque des revendications 1 à 8, dans lequeL on traite mécaniquement le fromage à traiter (F₁) et le second produit (I) de manière que le fromage traité (F₂) soit placé en tout ou en partie autour et à l'extérieur du second produit (I), en tout ou en partie.

10. Procédé selon l'une quelconque des revendications 6, 8, 9, dans lequel après une première étape de traitement mécanique, on réalise une seconde étape de traitement mécanique lorsque le fromage à traiter (F₁) présente encore une consistance élastique, de manière à enfermer totalement, en vue de former une inclusion, le second produit (I) dans le fromage traité (F₂).

11. Procédé selon l'une quelconque des revendications 1 à 10, dans lequel les protéines (P) sont présentes, en partie ou en totalité en partant d'un fromage à pâte pressée, fabriqué à partir de rétentat de lait issu d'ultrafiltration ou similaire.

12. Procédé selon l'une quelconque des revendications 1 à 11, qui ne comporte aucune étape d'addition de sels de fonte.

13. Installation de traitement d'un fromage affiné, notamment un fromage à pâte pressée, à l'exclusion de la fabrication d'un fromage fondu classique spécialement destiné à la mise en oeuvre du procédé selon l'une quelconque des revendications 1 à 12, qui comporte d'une part, des moyens (1) de chauffage entre 40°C et 80°C notamment au voisinage de 80°C du fromage à traiter (F₁), des moyens (2) d'adjonction de protéines (P), et des moyens (3) de mélange du fromage à traiter (F₁) avec les protéines (P) ; et, d'autre part, des moyens mécaniques (4) de mise en forme du fromage ainsi mélangé et additionné de protéines (P), fonctionnant à chaud.

14. Installation selon la revendication 13, dans laquelle aux moyens mécaniques (4) de mise en forme du fromage sont associés fonctionnellement des moyens mécaniques (5) de traitement d'un second produit (I) dans un poste de traitement mécanique.

15. Installation selon l'une quelconque des revendications 13 et 14, dans laquelle le poste de traitement mécanique est constitué par une machine de coextrusion ou une machine de copoussage ou une ligne rouleuse-fileuse-presse ou une machine équivalente.

16. Installation selon l'une quelconque des revendications 13 à 15, dans laquelle le poste de traitement mécanique comporte des moyens aptes à enfermer totalement le second produit (I) dans le fromage traité (F₂).

17. Produit alimentaire consommable, composite (B) qui comporte une spécialité fromagère à base de fromage traité (F₂) et un second produit (I), réalisé par le procédé selon l'une quelconque des revendications 1 à 12 ou au moyen de l'installation selon l'une quelconque des revendications 13 à 16, dans lequel la spécialité fromagère constitue une coque rigide (C) ayant des caractéristiques de texture, de goût et de couleur identiques ou voisines à celles du fromage à traiter (F₁) le second produit (I) constituant une garniture (G) rigide, molle ou quasi liquide.

18. Produit alimentaire selon la revendication 17, dans lequel la coque (C) est constituée d'au moins 80 % de fromage à pâte ferme notamment un fromage de Hollande.

19. Produit alimentaire selon l'une quelconque des revendications 17 et 18, dans lequel la garniture (G) est à base de fromage ou de confiserie ou de pâtisserie, ou de charcuterie, notamment.

20. Produit alimentaire selon l'une quelconque des revendications 17 à 19, dans lequel la coque (C) a une épaisseur de l'ordre de 2mm à 4mm environ.

21. Produit alimentaire selon l'une quelconque des revendications 17 à 20, dans lequel la garniture (G) représente entre 25 % et 90 % en poids

environ, notamment entre 70 % et 90 % en poids, du produit (B).

22. Produit alimentaire selon l'une quelconque des revendications 17 à 21, dans lequel la coque (C) a un extrait sec compris entre 50 % et 68 % environ et un taux de gras sur sec compris entre 35 % et 52 % environ.

23. Produit alimentaire selon l'une quelconque des revendications 17 à 22, dans lequel la garniture (G) est à base de fromage et a un extrait sec compris entre 18 % et 50 % environ et un taux de gras sur sec compris entre 0 % et 70 % environ.

24. Produit alimentaire selon l'une quelconque des revendications 17 à 23, qui présente un poids compris entre 5 et 150 g environ.

25. Produit alimentaire selon l'une quelconque des revendications 17 à 24, qui présente une forme générale de barre, de boule, d'oeuf.

**Claims**

1. A method of treating a cheese ($F_1$), the method comprising a first step of adding proteins (P) to the cheese ($F_1$), and a subsequent second step of mechanical shaping treatment, wherein firstly the cheese to be treated ($F_1$) is selected from ripened cheeses having at least 50% dry matter, and more particularly from pressed cheeses, with processed cheeses being excluded; and secondly the nature of the proteins (P) and the conditions under which they are added to the cheese to be treated ($F_1$) are selected in such a manner that the proteins (P) simultaneously are at least substantially soluble, are neutral or milky in taste, and act essentially as emulsifying agents and little or not at all as gelling agents; with this being done at a moderate temperature below the thermocoagulation temperature, thereby having the combined effect firstly of enabling the mechanical shaping treatment to be performed in particular by the techniques of extrusion-shaping, of rolling-spinning-pressing, extrusion-blowing, or the like, and secondly of obtaining a treated cheese ($F_2$) after the treatment having a texture, a taste, and a color that are substantially identical to those of the cheese to be treated ($F_1$) and a special shape resulting from the mechanical treatment used.

2. A method according to claim 1, in which the added proteins (P) are present in the cheese to be treated ($F_1$) firstly when it has a temperature lying in the range 40°C to 80°C, and in particular equal or close to 80°C, and secondly during a mixing step, the mechanical treatment being performed hot, in particular at at least 40°C and preferably at about 80°C immediately or shortly after addition of the proteins.

3. A method according to claim 1 or 2, in which the mechanical treatment is completed or practically completed not more than twenty minutes and preferably less than about fifteen minutes after the addition of proteins (P).

4. A method according to any one of claims 1 to 3, in which whey proteins are used.

5. A method according to any one of claims 1 to 4, in which the amount of protein (P) added is 2% to 10% by weight and in particular 5% to 10% by weight relative to the cheese to be treated ($F_1$).

6. A method according to any one of claims 1 to 5, in which the treated cheese ($F_2$) is shaped by mechanical treatment while simultaneously applying mechanical treatment to at least one second foodstuff or composition or speciality (I) in such a manner that an edible composite foodstuff (B) is made by associating the mechanical treatments of the treated cheese ($F_2$) and of the second foodstuff (I).

7. A method according to any one of claims 1 to 6, in which the proteins (P) added to the cheese to be treated ($F_1$) also serve to limit the exuding of fat and thus to control the establishment of a microscopically thin film of fat on the treated cheese ($F_2$), thereby firstly limiting the migration of water from the second foodstuff (I) to the treated cheese ($F_2$), and secondly imparting satisfactory feel and appearance to the final product.

8. A method according to any one of claims 1 to 7, in which a water-retaining additive and/or other food additives for texture, appearance, or flavor are added to the second foodstuff (I).

9. A method according to any one of claims 1 to 8, in which the cheese to be treated ($F_1$) and the second foodstuff (I) are treated mechanically in such a manner that the treated cheese ($F_2$) is placed completely or partially around and outside the second foodstuff (I), completely or partially.

10. A method according to any one of claims 6, 8, and 9, in which a second mechanical treatment step is performed after a first mechanical treatment step while the cheese to be treated ($F_1$) is still elastic in consistency, in such a manner as to completely enclose the second foodstuff (I) in the form of an inclusion inside the treated cheese ($F_2$).

11. A method according to any one of claims 1 to 10, in which the proteins (P) are present, in part or completely, starting from a pressed cheese manufactured from milk residue derived from ultrafiltration or the like.

12. A method according to any one of claims 1 to 11, which does not include any step of adding salts for making processed cheese.

13. An installation for treating a ripened cheese, in particular a pressed cheese, and excluding the manufacture of a conventional processed cheese, the installation being particularly intended for implementing the method according to any one of claims 1 to 11, and comprising firstly means (1) for heating the cheese to be treated ($F_1$) to a temperature in the range 40°C to 80°C and in particular close to 80°C, means (2) for adding proteins (P), and means (3) for mixing the cheese to be treated ($F_1$) with the proteins (P); and secondly mechanical means (4) for shaping the cheese mixed in this way and containing added proteins (P), the mechanical means operating hot.

14. An installation according to claim 13, in which the mechanical means (4) for shaping the cheese are functionally associated in a mechanical treatment station with mechanical means (5) for treating a second foodstuff (I).

15. An installation according to claim 13 or 14, in which the mechanical treatment station is constituted by a coextrusion machine or a cothrusting machine or a rolling-spinning-pressing stem, or an equivalent machine.

16. An installation according to any one of claims 13 to 15, in which the mechanical treatment station includes means suitable for completely enclosing the second foodstuff (I) in the treated cheese ($F_2$).

17. An edible composite foodstuff (B) comprising a speciality cheese based on treated cheese ($F_2$) and a second foodstuff (I), the composite foodstuff being made by the method according to any one of claims 1 to 12, or by means of the installation according to any one of claims 13 to 16, wherein the speciality cheese constitutes a rigid shell (C) having characteristics of texture, taste, and color that are identical or close to those of the cheese to be treated ($F_1$), the second foodstuff (I) constituting a fill (G) which is rigid, soft, or nearly liquid.

18. A foodstuff according to claim 17, in which the shell (C) is constituted by at least 80% firm cheese, and in particular Dutch cheese.

19. A foodstuff according to claim 17 or 18, in which the fill (G) is based on cheese, or on confectionary, or on charcuterie, in particular.

20. A foodstuff according to any one of claims 17 to 19, in which the thickness of the shell (C) is about 2 mm to about 4 mm.

21. A foodstuff according to any one of claims 17 to 20, in which the fill (G) constitutes about 25% to 90% by weight, and in particular 70% to 90% by weight of the foodstuff (B).

22. A foodstuff according to any one of claims 17 to 21, in which the dry matter content of the shell (C) lies in the range about 50% to about 68% and its fat content relative to dry matter lies in the range about 35% to about 52%.

23. A foodstuff according to any one of claims 17 to 22, in which the fill (G) is based on cheese and has a dry matter content lying in the range about 18% to about 50% and a fat content relative to its dry matter lying in the range 0% to about 70%.

24. A foodstuff according to any one of claims 17 to 23, whose weight lies in the range about 5 g to about 150 g.

25. A foodstuff according to any one of claims 17 to 24, having the general shape of a bar, a ball, or an egg.

**Patentansprüche**

1. Verfahren zu Behandlung von Käse ($F_1$) mit einem ersten Verfahrensschritt, bei dem dem Hase ($F_1$) Proteine (P) zugesetzt werden und einem zweiten, nachfolgenden verfahrensschritt, zur mechanischen Behandlung für die Formgebung in der man einerseits den zu behandelnden Käse ($F_1$) unter den gereiften Käsen mit weniger als 50% Trockenmassen und insbesondere unter den Hartkäsen auswählt, wobei die Schmelzkäse ausgenommen sind; und man andererseits die Art der Proteine (P) und die Verhältnisse ihrer Zugabe zu dem zu behandelnden Käse (F₁) auswählt, derart, daß die Proteine (P) gleichzeitig zumindest im wesentlichen löslich sind, einen neutralen oder milchigen Geschmack aufweisen und im wesentlichen die emulgierende und weniger oder gar nicht die gelierende Funktion erfüllen; und dieses bei einer mäßigen Temperatur unterhalb der Temperatur der Thermocoagulation, was zum Effekt hat, daß in Kombination einerseits eine mechanische Behandlung für die Formgebung möglich ist, insbesondere mittels Käseextrudiertechniken, Roll- und Strangpressen, Extrusionsblasen o.dgl., und daß andererseits durch die Behandlung ein behandelter Käse (F₂) hergestellt wird, der ein Gefüge, einen Geschmack, eine Farbe aufweist, die im wesentlichen mit denen des zu behandelnden Käses (F₁) identisch sind und eine spezifische Form besitzt, die aus der angewandten mechanischen Behandlung resultiert.

2. Verfahren nach Anspruch 1, dadurch gekennzeichnet, daß die hinzugefügten Proteine (P) in den zu behandelnden Käse (F₁) gegenwärtig sind, einerseits wenn diese eine Temperatur zwischen 40°C und 80°C, insbesondere gleich oder nahezu 80°C aufweist, andererseits während eines Mischschrittes, wobei die mechanische Behandlung bei Wärme, insbesondere bei wenigstens 40°C und vorzugsweise in der Größenordnung von 80°C unmittelbar oder kurz nach der Zugabe der Proteine durchgeführt wird.

3. Verfahren nach einem der Ansprüche 1 und 2, dadurch gekennzeichnet, daS die mechanische Behandlung höchstens 20 Minuten und vorzugsweise weniger als etwa 15 Minuten nach der Zugabe der Proteine (P) abgeschlossen oder so gut wie abgeschlossen ist.

4. Verfahren nach einem der Ansprüche 1 bis 3, dadurch gekennzeichnet, daß von Milchserumproteinen Gebrauch gemacht wird.

5. Verfahren nach einem der Ansprüche 1 bis 4, dadurch gekennzeichnet, daß im Verhältnis zu dem zu behandelnden Käse (F1) zwischen zwei Gew.-% und 10 Gew.-%, insbesondere zwischen 5 Gew.-% und 10 Gew -% Proteine (P) zugegeben werden.

6. Verfahren nach einem der Ansprüche 1 bis 5, dadurch gekennzeichnet, daß der behandelte Käse (F₂) durch mechanische Behandlung geformt wird und gleichzeitig wenigstens ein zweites Produkt oder Zusammensetzung oder spezielles Lebensmittel (I) mechanisch behandelt wird, derart, daß in Folge der mechanischen Behandlung der behandelte Käse (F₂) und das zweite Lebensmittelprodukt (I) miteinander verbunden werden, um ein zusaengemischtes Lebensmittelprodukt (B) zu schaffen.

7. Verfahren nach einem der Ansprüche 1 bis 6, dadurch gekennzeichnet, daß die den zu behandelnden Käse (F₁) hinzugefügten Proteine (P) außerdem zur Verringerung der Exsudation von Fett und demnach zur Kontrolle der Konstitution des behandelten Käses (F₂) einen Fettfilm mit mikroskopischer Dicke aufweisen, der gleichzeitig einerseits die Wanderung von Wasser vom zweiten Produkt (I) zum behandelten Käse (F₂) verringert und andererseits dem Produkt ein zufriederstellendes Aussehen und einen befriedigenden Griff verleihen.

8. Verfahren nach einem der Ansprüche 1 bis 7, dadurch gekennzeichnet, daß dem zweiten Produkt (I) ein Wasserbindemittel und/oder andere Lebensmittelzusätze für das Gefüge, die Gestalt, das Aroma hinzugefügt werden.

9. Verfahren nach einem der Ansprüche 1 bis 8, dadurch gekennzeichnet, daß der zu behandelnde Käse (F₁) und das zweite Produkt (I) mechanisch behandelt werden, derart, daß der behandelte Käse (F₂) vollständig oder teilweise um die Außenseite des zweiten produkts (I) herum angeordnet ist.

10. Verfahren nach einem der Ansprüche 6, 8, 9, dadurch gekennzeichnet, daß nach dem ersten mechanischen Verfahrensschritt ein zweiter mechanischer Verfahrensschritt angewendet wird, wenn der zu behandelnde Käse (F₁) weiterhin eine elastische Konsistenz aufweist, derart, daß das zweite Produkt (I) vollständig nach Art eines Einschlußes im behandelten Käse (F₂) eingeschlossen wird.

11. Verfahren nach einem der Ansprüche 1 bis 10, dadurch gekennzeichnet, daß die Proteine einem Hartkäse teilweise oder vollständig zu Anfang zugegeben werden, der aus dem Retentat der aus der Ultrafiltration o.dgl. abstammenden Milch hergestellt worden ist.

12. Verfahren nach einem der Ansprüche 1 bis 11, dadurch gekennzeichnet, daß es keinen Verfahrensschritt zur Zugabe von gelösten Salzen enthält.

13. Vorrichtung zur Behandlung von gereiftem Käse, insbesondere von Hartkäse, unter Ausschluß der Herstellung von klassischem Schmelzkäse, unter Verwendung eines Verfahrens nach einem der Ansprüche 1 bis 12, gekennzeichnet einerseits durch Mittel (1) zum Erwärmen des zu behandelnden Käses ($F_1$) zwischen 40°C und 80°Ç, insbesondere nahe 80°C, Mittel (2) zur Zugabe von Proteinen (P) und Mittel (3) zum Mischen von zu behandelndem Käse ($F_1$) mit den Proteinen (P); und andererseits durch mechanische Mittel (4) zur Formung des so gemischten und mit Proteinen (P) angereicherten Käses bei Wärme.

14. Vorrichtung nach Anspruch 13, dadurch gekennzeichnet, daß die mechanischen Mittel (4) zur Formgebung des Käses funktionell mit mechanischen Mitteln (5) zur Behandlung eines zweiten Produkts (I) in einer mechanischen Behandlungsstation verbunden sind.

15. Vorrichtung nach einem der Ansprüche 13 und 14, dadurch gekennzeichnet, daß die mechanische Behandlungsstation aus einer Koextrusionsmaschine oder einer Kopressmaschine oder Roll- und Stranpresstrecke oder äquivalente Maschinen bestehen.

16. Vorrichtung nach einem Ansprüche 13 bis 15, dadurch gekennzeichnet, daß die mechanische Behandlungsstation Mittel zum vollständigen Einschließen des zweiten Produkts (I) in den behandelten Käse ($F_2$) aufweist.

17. Zusammengesetztes Nahrungsmittel (B), welches eine Käsespezialität auf der Basis von behandeltem Käse ($F_2$) und einem zweiten Produkt (I) aufweist, gebildet durch das Verfahren nach einem der Ansprüche 1 bis 12 oder durch Vorrichtungsmittel nach einem der Ansprüche 13 bis 16, dadurch gekennzeichnet, daß die Käsespezialität eine feste Schale (C) aufweist, die Gefüge-, Geschmacks- und Farbeigenschaften besitzt, die identisch oder nahezu gleich sind wie die des zu behandelnden Käses ($F_1$), und daß das zweite Produkt (I) eine feste, weiche oder quasiflüssige Füllung (G) aufweist.

18. Nahrungsmittel nach Anspruch 17, dadurch gekennzeichnet, daß die Schale (C) aus wenigstens 80% Hartkäse, insbesondere aus holländischem Käse besteht.

19. Nahrungsmittel nach einem der Ansprüche 17 und 18, dadurch gekennzeichnet, daß die Füllung (G) aus einer Basis von Käse oder Süßwaren oder Backwaren oder insbesondere Fleisch- oder Wurstwaren besteht.

20. Nahrungsmittel nach einem der Ansprüche 17 bis 19, dadurch gekennzeichnet, daß die Schale (C) eine Dicke von etwa 2mm bis 4mm aufweist.

21. Nahrungsmittel nach einem der Ansprüche 17 bis 20, dadurch gekennzeichnet, daß die Füllung (G) etwa 25 Gew.-% bis 90 Gew.-%, insbesondere 70 Gew.-% bis 90 Gew.-% des Produkts (B) darstellt.

22. Nahrungsmittel nach einem der Ansprüche 17 bis 21, dadurch gekennzeichnet, daß die Schale (C) eine Gesamttrockensubstanz zwischen etwa 50% und 68% und einen Gesamttrockenfettanteil zwischen etwa 35% unf 52% aufweist.

23. Nahrungsmittel nach einem der Ansprüch 17 bis 22, dadurch gekennzeichnet, daß die Füllung (G) aus einer Käsebasis besteht und eine Gesamttrockensubstanz zwsichen etwa 18% und 50% und einen Gesamttrockenfettanteil zwischen eta 0% und 70% aufweist.

24. Nahrungsmittel nach einem der Ansprüche 17 bis 23, dadurch gekennzeichnet, daß sie ein Gesamtgewicht zwischen 5 und 150g aufweist.

25. Nahrungsmittel nach einem der Ansprüche 17 bis 24, dadurch gekennzeichnet, daß es eine Grundform einer Stange, einer Kugel, eines Eies aufweist.

F1

2 — P

1

3

I

B
G
4
F2
C
5

## FIG. 1

B

C,F2

G,I

## FIG. 2

B

C,F2

G,I

## FIG. 3

14